# EUROPEAN PATENT APPLICATION

(11) **EP 4 635 996 A1**
(43) Date of publication of application: **22.10.2025**
(21) Application number: 25169777.7
(22) Date of filing: 10.04.2025
(51) Int. Cl.: C08F 236/06, C08F 236/22, C08F 4/54

(54) **POLYDIENES WITH REDUCED SOLUTION VISCOSITY**

(30) Priority: 17.04.2024 US 202418638257
(71) Applicant: The Goodyear Tire & Rubber Company, Akron, OH 44316 (US)
(72) Inventor: MESGAR, Milad, Beachwood, Ohio, 44122 (US); MURRAY, Aaron Patrick, Chardon, 44024 (US); LAME, Anthony Ryan, Stow, 44242 (US)
(74) Representative: Kutsch, Bernd

(57) **Abstract**

A 1,4-cis polydiene formed by polymerizing at least a 1,3-butadiene monomer in the presence of a lanthanide catalyst system and a bis-diene additive is disclosed.

## Description

### Background of the Invention

The use of polybutadiene, polyisoprenes, polystyrenes, and their copolymers is known in rubber and tire industries. When cured, relatively high 1,4-cis content polybutadienes impart unique performance properties on downstream products. 1,4-cis polydienes formed by lanthanide-based (also known as rare earth) catalyst systems contain a linear backbone and are believed to provide better tensile properties, higher abrasion resistance, lower hysteresis, and better fatigue resistance compared to the 1,4-cis polydienes prepared with other catalyst systems.

Nowadays, and almost exclusively, relatively high 1,4-cis content polybutadienes are produced using rare earth transition metal catalysts, such as neodymium. Despite the advantages, using such catalysts in production of relatively high 1,4-cis content polybutadienes presents certain challenges: high solution viscosity; low solids production rates; fouling; and high cold flow; etc. Nearly all relatively high 1,4-cis polydiene production facilities face these challenges due to an increased industrial demand of this rubber.

Efforts have been made to improve these challenges. For example, U.S. Pat. No. 10,316,121 discloses certain Lewis acid additives to the polymerization systems including the active cement for preparing relatively high 1,4- cis polydienes having useful resistance to cold flow via a lanthanide-based catalyst and a conjugated diene monomer.

U.S. Pat. No. 6,576,731 discloses certain reagents to reduce solution viscosity/Mooney viscosity ratio in the preparation of polybutadienes via lanthanide-based catalysts. The reagents are specific silanes used as an intermediate product for the preparation of the polybutadienes.

It is now discovered that addition of the bis-diene additive to the manufacture of relatively high 1,4-cis polydienes will desirably promote a reduced ratio of solution viscosity to Mooney viscosity. The present disclosure further relates to the processes in which the polydiene compositions are synthesized.

### Summary of the Invention

The invention relates to a process in accordance with claim 1, to a 1,4-cis polydiene in accordance with claim 6 and to a tire in accordance with claim 15.

Dependent claims refer to preferred embodiments of the invention.

In a preferred aspect of the invention, the 1,4-cis polydiene has a 1,4-cis-linkage content of at least 90%, more preferably at least 94% or at least 95% or at least 96%. 95.23%,

In a preferred aspect, Tthe present invention provides a polydiene with improved processability while maintaining and/or enhancing the performance of a downstream product incorporating such polydiene. The improved processability and performance is achieved by adding bis-dienes by means of a comonomer.

One or more embodiments of this disclosure relates to a method of preparing a cis polydiene with reduced SSV/mooney ratio. According to the contemplated methods, a polymerization system of 1,4-cis polydiene is prepared by introducing a lanthanide-based catalyst and a conjugated diene monomer to either (A) a carbon-bridged bis-diene or (B) a heteroatom-bridged bis-diene compound.

The present disclosure also relates to a branched functionalized polymer defined by the formula:

P-(CH₂)ₙ-X-(CH₂)ₘ-P,

where m+n is greater than 2; and P is a 1,4-cis polydiene polymer chain that has a 1,4-cis linkage content that is greater than 90%. In one embodiment, X is individually a -CR₂-where Rs are hydrogens, fluorides, alkyls, cycloalkyl, or aryls or the combination.

In other preferred embodiments, X is -SiR₂- where R is hydrogen, alkyl, aryl, alkoxy, aryloxy, monovalent organic group, or the combination. In other preferred embodiments, X is 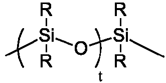 where R is hydrogen, alkyl, aryl, Alkyloxy, aryloxy or monovalent organic group or the combination and t is 1 to 8.

In other preferred embodiments, X is -PR- where R is alkyl or aryl.

In other preferred embodiments, X is -P(O)R- where R is alkyl or aryl.

In other preferred embodiments, X is 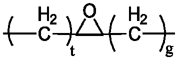 where t+g is greater than 2.

In other preferred embodiments, X is an ethylene oxides or propylene oxides group.

Other preferred embodiments of this disclosure also provide a branched functionalized polymer defined by the formula:

P-(CH₂)ₙ-Y-(CH₂)ₘ-P

where m+n is greater than 2; Y is a sulfur or other chalcogens; and P is a 1,4-cis polydiene polymer chain that has a 1,4-cis linkage content that is greater than 90%.

According to preferred embodiments of this disclosure, a method comprises the steps of preparing the long-chain polymers by connecting the two polymer chains with the diene containing carbon or heteroatoms, wherein the reactor system is batched or continuous or a mixed of two.

### Detailed Description of Preferred Embodiments of the Invention

It has been discovered that incorporation of bis-dienes to 1,4-cis polydiene polymer is the basis, at least in part, of producing a 1,4-cis polydiene with reduced solution viscosity. Another aspect of this invention is a 1,4-cis polydiene produced using a functionalized bis-diene additive. The contemplated bis-diene comprises an organic functionality bearing sulfur, oxygen, silicon, or phosphorus atom and is used in the presence of a lanthanide-based catalyst. Incorporation of one or more of the disclosed bis-dienes promotes long-chain branching of the 1,4-cis polydienes - which may or may not be functionalized - while desirably reducing the number of process steps, minimizing by-product waste, and eliminating the need for additional additives.

One or more embodiments of this disclosure provide a method of preparing a branched 1,4- cis polydiene using a lanthanide-based catalyst in which the catalyst itself is prepared by incorporation of bis-diene in it. Other embodiments of the present invention provide a method of preparing a heteroatom-functionalized polymer, the method comprising the steps of (A) preparing a polymerization system including a branched 1,4-cis polydiene by introducing a lanthanide-based catalyst, a bis-diene and a conjugated diene monomer; and (B) adding a heteroatom containing bis-dienes to the polymerization system including a cis-1,4-polydiene.

Generally speaking, branched polymers that show a reduced solution viscosity according to the present invention may be prepared by combining a diene monomer and a lanthanide-based catalyst with a bis-diene additive before starting a polymerization of the 1,4-cis polydiene or during the polymerization.

### I. Diene Monomer

The cis-1,4-polydienes may be prepared by polymerizing conjugated diene monomer using the disclosed catalyst system. Many types of unsaturated monomers which contain carbon-carbon double bonds can be polymerized into polymers using such metal catalysts. Elastomeric or rubbery polymers can be synthesized by polymerizing diene monomers utilizing this type of metal initiator system. The diene monomers that can be polymerized into synthetic rubbery polymers can be either conjugated or nonconjugated diolefins. Conjugated diolefin monomers containing from 4 to 8 carbon atoms are generally preferred. Vinyl-substituted aromatic monomers can also be copolymerized with one or more diene monomers into rubbery polymers, for example styrene-butadiene rubber (SBR). Some representative examples of conjugated diene monomers that can be polymerized into rubbery polymers include 1,3-butadiene, isoprene, 1,3-pentadiene, 2,3-dimethyl-1,3-butadiene, 2-methyl1,3-pentadiene, 2,3-dimethyl-1,3-pentadiene, 2-phenyl-1,3-butadiene, and 4,5-diethyl-1,3-octadiene. Some representative examples of vinyl-substituted aromatic monomers that can be utilized in the synthesis of rubbery polymers include styrene, 1-vinylnapthalene, 3-methylstyrene, 3,5-diethylstyrene, 4-propylstyrene, 2,4,6-trimethylstyrene, 4-dodecylstyrene, 3-methyl-5-normal-hexylstyrene, 4-phenylstyrene, 2-ethyl-4-benzylstyrene, 3,5-diphenylstyrene, 2,3,4,5-tetraethylstyrene, 3-ethyl-1-vinylnapthalene, 6-isopropyl-1-vinylnapthalene, 6-cyclohexyl-1-vinylnapthalene, 7-dodecyl-2-vinylnapthalene, and α-methylstyrene.

There is no limitation made herein to the diene monomers employed. In one embodiment the monomer can be 1,3-butadiene, which can be used to polymerize a cis-1,4 polybutadiene.

### II. The Catalyst System

The invention disclosed here is not necessarily limited by specific lanthanide-based systems. In embodiments of the disclosure, the catalyst systems used in the process of this invention is made by preforming three catalyst components: (1) an alkylating agent; (2) a lanthanide-containing compound; and (3) a halogen source. In other embodiments, a compound containing a non-coordinating anion can be employed as a halogen source. In solution polymerizations of this invention, a polymerization medium comprising (4) an organic solvent may also be used.

Preferred catalyst components comprise (1) an organoaluminum compound, (2) a neodymium carboxylate, and (3) a dialkyl aluminum chloride. In making the neodymium catalyst system, the neodymium carboxylate and the organoaluminum compound are first reacted together for 10 minutes to 30 minutes in the presence of isoprene to produce a neodymium-aluminum catalyst component. The neodymium carboxylate and the organoaluminum compound are preferable reacted for 12 minutes to 30 minutes and are more preferable reacted for 15 to 25 minutes in producing the neodymium-aluminum catalyst component.

The neodymium-aluminum catalyst component is then reacted with the dialkyl aluminum chloride for a period of at least 30 minutes to produce the neodymium catalyst system. The activity of the neodymium catalyst system normally improves as the time allowed for this step is increased up to 24 hours. Greater catalyst activity is not normally attained by increasing the aging time over 24 hours. However, the catalyst system can be aged for much longer time periods before being used without any detrimental results.

The neodymium catalyst system will typically be preformed at a temperature that is within the range of 0°C to 100°C. The neodymium catalyst system will more typically be prepared at a temperature that is within the range of 10°C to 60°C. The neodymium catalyst system will preferably be prepared at a temperature that is within the range of 15°C to 30°C.

The organoaluminum compound contains at least one carbon to aluminum bond and can be represented by the structural formula: 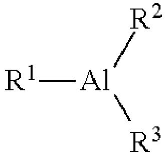 in which R¹ is selected from the group consisting of alkyl (including cycloalkyl), alkoxy, aryl, alkaryl, arylalkyl radicals and hydrogen: R² is selected from the group consisting of alkyl (including cycloalkyl), aryl, alkaryl, arylalkyl radicals and hydrogen and R³ is selected from a group consisting of alkyl (including cycloalkyl), aryl, alkaryl and arylalkyl radicals. Representative of the compounds corresponding to this definition are: diethylaluminum hydride, di-n-propylaluminum hydride, di-n-butylaluminum hydride, diisobutylaluminum hydride, diphenylaluminum hydride, di-p-tolylaluminum hydride, dibenzylaluminum hydride, phenylethylaluminum hydride, phenyl-n-propylaluminum hydride, p-tolylethylaluminum hydride, p-tolyl-n-propylaluminum hydride, p-tolylisopropylaluminum hydride, benzylethylaluminum hydride, benzyl-n-propylaluminum hydride, and benzylisopropylaluminum hydride and other organoaluminum hydrides. Also included are ethylaluminum dihydride, butylaluminum dihydride, isobutylaluminum dihydride, octylaluminum dihydride, amylaluminum dihydride, and other organoaluminum dihydrides. Also included are diethylaluminum ethoxide and dipropylaluminum ethoxide. Also includes are trimethylaluminum, triethylaluminum, tri-n-propylaluminum, triisopropylaluminum, tri-n-propylaluminum, triisopropylaluminim, tri-n-butylaluminum, triisobutylaluminum, tripentylaluminum, trihexylaluminum, tricyclohexylaluminum, trioctylaluminum, triphenylaluminum, tri-p-tolylaluminum, tribenzylaluminum, ethyldiphenylaluminum, ethyl-di-p-tolylaluminum, ethyldibenzylaluminum, diethylphenylaluminum, diethyl-p-tolylaluminum, and diethylbenzylaluminum and other triorganoaluminum compounds.

The neodymium carboxylate utilizes an organic monocarboxylic acid ligand that contains from 1 to 20 carbon atoms, such as acetic acid, propionic acid, valeric acid, hexanoic acid, 2-ethylhexanoic acid, neodecanoic acid, lauric acid, stearic acid and the like neodymium naphthenate, neodymium neodecanoate, neodymium octanoate, and other neodymium metal complexes with carboxylic acid containing ligands containing from 1 to 20 carbon atoms.

The proportions of the catalyst components utilized in making the neodymium catalyst system of this invention can be varied widely. The atomic ratio of the halide ion to the neodymium metal can vary from 0.1/1 to 6/1. A more preferred ratio is from 0.5/1 to 3.5/1 and the most preferred ratio is 2/1. The molar ratio of the trialkylaluminum or alkylaluminum hydride to neodymium metal can range from 4/1 to 200/1 with the most preferred range being from 8/1 to 100/1. The molar ratio of isoprene to neodymium metal can range from 0.2/1 to 3000/1 with the most preferred range being from 5/1 to 500/1.

The amount of catalyst used to initiate the polymerization can be varied over a wide range. Low concentrations of the catalyst system are normally desirable in order to minimize ash problems. It has been found that polymerizations will occur when the catalyst level of the neodymium metal varies between 0.05 and 1.0 millimole of neodymium metal per 100 grams of monomer. A preferred ratio is between 0.1 and 0.3 millimole of neodymium metal per 100 grams of monomer.

The concentration of the total catalyst system employed of course, depends upon factors such as purity of the system, polymerization rate desired, temperature and other factors. Therefore, specific concentrations cannot be set forth except to say that catalytic amounts are used.

Temperatures at which the polymerization reaction is carried out can be varied over a wide range. Usually, the temperature can be varied from extremely low temperatures such as -60°C up to high temperatures, such as 150°C or higher. Thus, the temperature is not a critical factor of the invention. It is generally preferred, however, to conduct the reaction at a temperature in the range of from 10°C to 90°C. The pressure at which the polymerization is carried out can also be varied over a wide range. The reaction can be conducted at atmospheric pressure or, if desired, it can be carried out at sub-atmospheric or superatmospheric pressure. Generally, a satisfactory polymerization is obtained when the reaction is carried out at autogenous pressure, developed by the reactants under the operating conditions used.

The polymerization can be terminated by the addition of an alcohol, acid, or another protic source, such as water. Such a termination step results in the formation of a protic acid. However, it has been unexpectedly found that better color can be attained by utilizing an alkaline aqueous neutralizer solution to terminate the polymerization. Another advantage of using an alkaline aqueous neutralizer solution to terminate the polymerization is that no residual organic materials are added to the polymeric product.

Polymerization can be terminated by simply adding an alkaline aqueous neutralizer solution to the polymer cement. The amount of alkaline aqueous neutralizer solution added will typically be within the range of 1 weight percent to 50 weight percent based upon the weight of the polymer cement. More typically, the amount of the alkaline aqueous neutralizer solution added will be within the range of 4 weight percent to 35 weight percent based upon the weight of the polymer cement. Preferable, the amount of the alkaline aqueous neutralizer solution added will be within the range of 5 weight percent to 15 weight percent based upon the weight of the polymer cement.

The alkaline aqueous neutralizer solution will typically have a pH which is within the range of 7.1 to 9.5. The alkaline aqueous neutralizer solution will more typically have a pH which is within the range of 7.5 to 9.0 and will preferably have a pH that is within the range of 8.0 to 8.5. The alkaline aqueous neutralizer solution will generally be a solution of an inorganic base, such as a sodium carbonate, a potassium carbonate, a sodium bicarbonate, a potassium bicarbonate, a sodium phosphate, a potassium phosphate, and the like. For instance, the alkaline aqueous neutralizer solution can be a 0.25 weight percent solution of sodium bicarbonate in water. Since the alkaline aqueous neutralizer solution is not soluble with the polymer cement it is important to utilize a significant level of agitation to mix the alkaline aqueous neutralizer solution into throughout the polymer cement to terminate the polymerization. Since the alkaline aqueous neutralizer solution is not soluble in the polymer cement it will readily separate after agitation is discontinued.

The 1,4-cis polydiene of the present invention is made via solution polymerization in the presence of a neodymium catalyst system. Such polymerizations are typically conducted in a hydrocarbon solvent that can be one or more aliphatic, aromatic, paraffinic, or cycloparaffinic compounds. These solvents will normally contain from 4 to 10 carbon atoms per molecule and will be liquids under the conditions of the polymerization. Some representative examples of suitable organic solvents include pentane, isooctane, cyclohexane, normal hexane, benzene, toluene, xylene, ethylbenzene, and the like, alone or in admixture.

Catalyst systems that may be employed in one or more embodiments of this invention are commercially available. For example, useful preformed catalyst systems are available under the tradename COMCAT Nd-FC (NH), COMCAT Nd-FC/20 (NH), COMCAT Nd-FC/SF [COMAR CHEMICALS (Pty) Ltd].

### III. The Bis-Diene Additive

As used herein, a "bis-diene" refers to compounds that contain at least two dienes groups bonded together by carbons or heteroatoms or their combinations.

In one or more embodiments, 1,4-cis polydiene contained bis-diene compound may be defined by the formula I:

P-(CH₂)ₙ-X-(CH₂)ₘ-P (I)

where m+n is greater than 2, X is individually an aliphatic hydrocarbon group, a cycloaliphatic hydrocarbon, aliphatic perfluoro carbon, or an aromatic hydrocarbon or the combination of those. P is a 1,4-cis polydiene polymer chain that has a 1,4-cis linkage content that is greater than 90%.

In one or more embodiments, 1,4-cis polydiene contained bis-diene compound may be defined by the formula II:

P-(CH₂)ₙ-Y-(CH₂)ₘ-P (II)

where m+n is greater than 2, Y is sulfur or other chalcogens. P is a 1,4-cis polydiene polymer chain that has a 1,4-cis linkage content that is greater than 90%.

In one or more embodiments, 1,4-cis polydiene contained bis-diene compound may be defined by the formula III:

P-(CH₂)ₙ-Z-(CH₂)ₘ-P (III)

where m+n is greater than 2, Z is a -SiR₂-, or -GeR₂- or -SnR₂-, where R is hydrogen, alkyl, aryl, alkoxy, aryloxy, monovalent organic group, or the combination. P is a 1,4-cis polydiene polymer chain that has a 1,4-cis linkage content that is greater than 90%.

In one or more embodiments, 1,4-cis polydiene contained bis-diene compound may be defined by the formula IV:

P-(CH₂)ₙ-T-(CH₂)ₘ-P (IV)

where m+n is greater than 2, T is a siloxane group ( 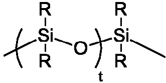 ) where R is hydrogen, alkyl, aryl, alkyloxy, aryloxy or monovalent organic group or the combination and t is 1 to 8. P is a 1,4-cis polydiene polymer chain that has a 1,4-cis linkage content that is greater than 90%.

In one or more embodiments, 1,4-cis polydiene contained bis-diene compound may be defined by the formula V:

P-(CH₂)ₙ-G-(CH₂)ₘ-P (V)

where m+n is greater than 2, G is an alkyl phosphine, aryl phosphine, alkyl phosphine oxide, aryl phosphine oxide group. P is a 1,4-cis polydiene polymer chain that has a 1,4-cis linkage content that is greater than 90%.

In one or more embodiments, 1,4-cis polydiene contained bis-diene compound may be defined by the formula VI:

P-(CH₂)ₙ-H-(CH₂)ₘ-P (VI)

where m+n is greater than 2, H is 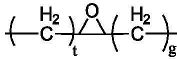 where t+g is greater than 2. P is a 1,4-cis polydiene polymer chain that has a 1,4-cis linkage content that is greater than 90%.

In one or more embodiments, 1,4-cis polydiene contained bis-diene compound may be defined by the formula VII:

P-(CH₂)ₙ-L-(CH₂)ₘ-P (VII)

where m+n is greater than 2, L may be an ethylene oxides or propylene oxides group. P is a 1,4-cis polydiene polymer chain that has a 1,4-cis linkage content that is greater than 90%.

In one or more embodiments, the bis-diene compound may be added after a monomer conversion of at least 50%, in other embodiments at least 60%, in other embodiments at least 70%, in other embodiments at least 80%, in other embodiments at least 90%, and in other embodiments at least 95%.

In one or more embodiments, the bis-diene compound may be added to a lanthanide-based catalyst system and the whole catalyst mixture may be used as a lanthanide-based catalyst system.

In one or more embodiments, the bis-diene compound may be added in different reactor that polymerization was initiated.

In one or more embodiments, the amount of the bis-diene compound used to prepare the branched polydienes of the present invention may be represented by the amount of the polymer present within the polymerization mixture. In one or more embodiments, the amounts of the bis-diene employed is at least 1 mmol, in one or more embodiments at least 2 mmol, in one or more embodiments at least 3 mmol, in one or more embodiments at least 5 mmol, in one or more embodiments at least 7 mmol per 1500 g of 1,4-cis polydiene. In the contemplated embodiment, the bis-diene is added anywhere from 0% to 95% monomer conversion.

Representative examples of suitable bis-dienes that are bridged by an aliphatic hydrocarbon group, a cycloaliphatic hydrocarbon, aliphatic perfluoro carbon, or an aromatic hydrocarbon or the combination include 3,6-dimethyleneocta-1,7-diene, 3,7-dimethylenenona-1,8-diene, 3,8-dimethylenedeca-1,9-diene, 3,9-dimethyleneundeca-1,10-diene, 3,10-dimethylenedodeca-1,11-diene, 3,11-dimethylenetrideca-1,12-diene, 3,12-dimethylenetetradeca-1,13-diene, 3,13-dimethylenepentadeca-1,14-diene, 3,14-dimethylenehexadeca-1,15-diene, 3,15-dimethyleneheptadeca-1,16-diene, 3,16-dimethyleneoctadeca-1,17-diene, 3,17-dimethylenenonadeca-1,18-diene, 3,18-dimethyleneicosa-1,19-diene, 3,19-dimethylenehenicosa-1,20-diene, 3,20-dimethylenedocosa-1,21-diene, 7,10-dimethylene-7-vinyl-m-menth-8-ene, 1,3-bis(2-methylenebut-3-enyl)cyclohexane, 1,3-bis(3-methylenepent-4-enyl)cyclohexane, 3-methylene-6-[3-(4-methylenehex-5-enyl)cyclohexyl]hex-1-ene, 3-methylene-7-[3-(5-methylenehept-6-enyl)cyclohexyl]hept-1-ene, 7,10-dimethylene-7-vinyl-p-menth-8-ene, 1,4-bis(2-methylenebut-3-enyl)cyclohexane, 3-methylene-6-[4-(4-methylenehex-5-enyl)cyclohexyl]hex-1-ene, 3-methylene-7-[4-(5-methylenehept-6-enyl)cyclohexyl]hept-1-ene, 1,3-bis(2-methylenebut-3-enyl)benzene, 1,4-bis(3-methylenepent-4-enyl)benzene, 3-methylene-7-[4-(5-methylenehept-6-enyl)phenyl]hept-1-ene, 1,3-bis(2-methylenebut-3-enyl)benzene, 1,3-bis(3-methylenepent-4-enyl)benzene, 3-methylene-6-[3-(4-methylenehex-5-enyl)phenyl]hex-1-ene, 4,4,5,5-tetrafluoro-3,6-dimethyleneocta-1,7-diene, 4,4,5,5,6,6-hexafluoro-3,7-dimethylenenona-1,8-diene, 4,4,5,5,6,6,7,7-octafluoro-3,8-dimethylenedeca-1,9-diene, 4,4,5,5,6,6,7,7,8,8-decafluoro-3,9-dimethyleneundeca-1,10-diene, 4,4,5,5,6,6,7,7,8,8,9,9-dodecafluoro-3,10-dimethylenedodeca-1,11-diene, 5,5,6,6-tetrafluoro-3,8-dimethylenedeca-1,9-diene, 5,5,6,6,7,7-hexafluoro-3,9-dimethyleneundeca-1,10-diene, 5,5,6,6,7,7,8,8-octafluoro-3,10-dimethylenedodeca-1,11-diene, 5,5,6,6,7,7,8,8,9,9-decafluoro-3,11-dimethylenetrideca-1,12-diene, 5,5,6,6,7,7,8,8,9,9,10,10-dodecafluoro-3,12-dimethylenetetradeca-1,13-diene, 3,10-dimethylenedodeca-1,6,11-triene, 3,12-dimethylenetetradeca-1,7,13-triene, 3,14-dimethylenehexadeca-1,8,15-triene, 3,16-dimethyleneoctadeca-1,9,17-triene, 3,18-dimethyleneicosa-1,10,19-triene, 3,20-dimethylenedocosa-1,11,21-triene, (6E)-3,10-dimethylenedodeca-1,6,11-triene, (6Z)-3,10-dimethylenedodeca-1,6,11-triene.

Representative examples of suitable bis-dienes that are bridged by sulfur and other chalcogens or the combination include 2-(1-methyleneprop-2-enyldithio)buta-1,3-diene, 2-[(2-methylenebut-3-enyldithio)methyl]buta-1,3-diene, 3-methylene-5-(3-methylenepent-4-enyldithio)pent-1-ene, 3-methylene-6-(4-methylenehex-5-enyldithio)hex-1-ene, 3-methylene-7-(5-methylenehept-6-enyldithio)hept-1-ene.

Representative examples of suitable bis-dienes that are bridged by silane or siloxane include dimethylbis(1-methyleneprop-2-enyl)silane, dimethylbis(2-methylenebut-3-enyl)silane, dimethylbis(3-methylenepent-4-enyl)silane, dimethoxybis(1-methyleneprop-2-enyl)silane, dimethoxybis(2-methylenebut-3-enyl)silane, dimethoxybis(3-methylenepent-4-enyl)silane, [dimethyl(1-methyleneprop-2-enyl)siloxy]bis(methyl)(1-methyleneprop-2-enyl)silane, [dimethyl(2-methylenebut-3-enyl)siloxy]bis(methyl)(2-methylenebut-3-enyl)silane.

Representative examples of suitable bis-dienes that are bridged by phosphine or phosphine oxides include methylbis(1-methyleneprop-2-enyl)phosphine, bis(1-methyleneprop-2-enyl)(phenyl)phosphine, methylbis(1-methyleneprop-2-enyl)phosphine oxide, bis(1-methyleneprop-2-enyl)(phenyl)phosphine oxide, methylbis(2-methylenebut-3-enyl)phosphine, bis(2-methylenebut-3-enyl)(phenyl)phosphine, methylbis(2-methylenebut-3-enyl)phosphine oxide, bis(2-methylenebut-3-enyl)(phenyl)phosphine oxide.

Representative examples of suitable bis-dienes that are bridged by epoxide include 2,3-bis(2-methylenebut-3-enyl)oxirane, 2,3-bis(3-methylenepent-4-enyl)oxirane, 2,3-bis(4-methylenehex-5-enyl)oxirane.

Representative examples of suitable bis-dienes that are bridged may be ethylene oxides that include 3-methylene-5-[2-(3-methylenepent-4-enyloxy)ethoxy]pent-1-ene, 3-methylene-6-[2-(4-methylenehex-5-enyloxy)ethoxy]hex-1-ene, 3-methylene-7-[2-(5-methylenehept-6-enyloxy)ethoxy]hept-1-ene, 3-methylene-8-[2-(6-methyleneoct-7-enyloxy)ethoxy]oct-1-ene, 14-methylene-2-vinyl-5,8,11-trioxahexadeca-1,15-diene, 16-methylene-2-vinyl-6,9,12-trioxaoctadeca-1,17-diene, 18-methylene-2-vinyl-7,10,13-trioxaicosa-1,19-diene, 20-methylene-2-vinyl-8,11,14-trioxadocosa-1,21-diene.

### Final Polymer

In one or more preferred embodiments, the final polymers may have a 1,2-linkage content that is less than 1.5% where the percentages are based upon the number of diene mer units adopting the 1,2-linkage versus the total number of diene mer units. In one or more embodiments, these polymers may have a 1,2-linkage content that is from 0.05% to 1.5%. The cis-1,4-, 1,2-, and trans-1,4-linkage contents can be determined by infrared spectroscopy.

In one or more embodiments, the number average molecular weight (Mn) of the cis-1,4-polydiene polymers may be from 25,000 to 700,000, and more preferably from 50,000 to 350,000, and most preferably 125000 to 250000 as determined using size exclusion chromotography (SEC).

In the contemplated embodiment, the 1,4-cis polydiene is characterized by a Mooney viscosity measurement (ML1+4 at 100 °C) from 15 to 90 and, most preferably from 40 to 65.

In one embodiment, the polymer may be 1,4-cis polybutadiene rubber (BR). The BR may be conveniently characterized, for example, by having at least a 90 percent cis 1,4-content. In one embodiment, the polymer is functionalized. In another embodiment, the polymer is not.

The final polymer may be compounded into a rubber composition. The rubber composition may optionally include, in addition to the polymer, one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methyl butadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the at least one additional rubber is preferably of at least two of diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, additional cis 1,4-polybutadiene rubber (BR) may be used.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 1 to 200 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300. The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as silicas commercially available from PPG Industries under the Hi-Sil trademark with designations 210 and 243; silicas available from Rhodia, with, for example, designations of Z1165MP and Z165GR, and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991.

Other fillers may be used in the rubber composition including particulate fillers including ultra-high molecular weight polyethylene (UHMWPE), crosslinked particulate polymer gels including those disclosed in U.S. Pat. No. 6,242,534; 6,207,757; 6,133,364; 6,372,857; 5,395,891; or 6,127,488, and plasticized starch composite filler including that disclosed in U.S. Pat. No. 5,672,639. Such other fillers may be used in an amount ranging from 1 to 30 phr.

In one embodiment the rubber composition may contain a conventional sulfur containing organosilicon compound. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include compounds disclosed in U.S. Pat. No. 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Pat. No. 6,849,754. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in *The Vanderbilt Rubber Handbook* (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140° C. and 190° C. The appropriate duration of the thermomechanical working varies as a function of the operating conditions, and the volume and nature of the components. For example, the thermomechanical working may be from 1 to 20 minutes.

The 1,4-cis polydienes, or elastomers or rubber compositions of this invention may be incorporated into various articles of manufacture, such as, for example tires and industrial rubber products, may be prepared using such rubber compositions. Upon vulcanization, such a rubber composition may be incorporated into a pneumatic or non-pneumatic tire, belt, hose, air spring, shoe product or motor mount. In the case of a tire, the rubber composition may be incorporated in a variety of rubber tire components, such as, for example, a tread (including tread cap and/or tread base), sidewall, apex, chafer, sidewall, insert, wirecoat and/or innerliner. In one embodiment, the compound is a tread. In yet further embodiments, the composition can be used in adhesives.

A pneumatic tire of the present invention may be a race tire, passenger tire, aircraft tire, agricultural, earthmover, off-the-road, or truck tire. In one embodiment, the tire is a passenger or truck tire. The tire may also be a radial or bias.

This invention is illustrated by the following examples. Unless specifically indicated otherwise, parts and percentages are given by weight.

### Experiment 1 (Control):

The polymerizations were carried out in a 10-gallon (37,85 Liter) agitated reactor set to 75°C while the initial pressure ranged between 40 to 50 psig (1 psig = 6895 Pa). To remove impurities, the mixture was dried by circulating over a drying bed packed with silica gel, activated alumina, and molecular sieves for approximately 16 hours. The desired quantity of premix was transferred to the reactor. The reactor was filled with 13.62 Kg of premix (12%, 1620 gram of 1,3-butadiene in 12000 gram of hexane), and diisobutyl Aluminum Hydride (DIBAH), (14 mmol). The catalyst, neodymium preforms which has the Nd molarity of 0.06 (0.085 mmphr), was injected (23 mL) to the reactor to initiate the reaction. The catalyst was obtained from Comar Chemicals Ltd. and used as is. The reactor temperature spiked to 81-84°C. When reaction was complete after 90 minutes, the reactor content (cement) was transferred to a termination cylinder (15-gallon agitated cylinder), where isopropanol (2 phm), water (50 phm), and Irganox 1520L (0.15 phm) were added and agitated for 0.5 hour. The batch was steam-stripped and dried. The yield of the polymer was 1591 g (98.2% conversion). The Mooney viscosity (ML1+4) of the polymer was determined to be 18.5 at 100°C by using a Monsanto Mooney viscometer with a large rotor, a one-minute warm-up time, and a four-minute running time. As determined by gel permeation chromatography (GPC), the polymer had a number average molecular Weight (Mn) of 167,800 g/mole, a weight average molecular weight (Mw) of 267,000 g/mole, and a molecular weight distribution (Mw/Mn) of 1.6. The infrared spectroscopic analysis of the polymer indicated a 1,4-cis-linkage content of 95.23%, a 1,4-trans- linkage content of 4.13%, and a 1,2-linkage content of 0.64%.

### Experiment 2:

The same procedure as above was followed, except the addition of 3,8-bis(methylene)-1,9-decadiene (3.1 mmol) in the premix solution. The yield of the polymer was 1601 g (98.9% conversion). The Mooney viscosity (ML1+4) of the polymer was determined to be 45.9 at 100°C by using a Monsanto Mooney viscometer with a large rotor, a one-minute warm-up time, and a four-minute running time. As determined by gel permeation chromatography (GPC), the polymer had a number average molecular weight (Mn) of 202,600 g/mole, a weight average molecular weight (Mw) of 396,000 g/mole, and a molecular weight distribution (Mw/Mn) of 1.95. The infrared spectroscopic analysis of the polymer indicated a 1,4-cis-linkage content of 96.1%, a 1,4-trans-linkage content of 3.65%, and a 1,2-linkage content of 0.25%.

### Experiment 3:

The same procedure as above was followed, except the addition of 3,8-bis(methylene)-1,9-decadiene (6.6 mmol) in the premix solution. The yield of the polymer was 1577 g (97.3% conversion). The Mooney viscosity (ML1+4) of the polymer was determined to be 89.4 at 100°C by using a Monsanto Mooney viscometer with a large rotor, a one-minute warm-up time, and a four-minute running time. As determined by gel permeation chromatography (GPC), the polymer had a number average molecular weight (Mn) of 163,800 g/mole, a weight average molecular weight (Mw) of 365,000 g/mole, and a molecular weight distribution (Mw/Mn) of 2.23. The infrared spectroscopic analysis of the polymer indicated a 1,4-cis-linkage content of 95.55%, a 1,4-trans-linkage content of 4.14%, and a 1,2-linkage content of 0.31 %.

## Claims

1. A process for the synthesis of a 1,4-cis polydiene, the process comprising the steps of polymerizing at least a 1,3-butadiene monomer in the presence of a lanthanide catalyst system and a bis-diene additive.

2. The process of claim 1, wherein the bis-diene comprises the formula: Diene-(CH₂)ₙ-Y-(CH₂)ₘ-Diene, where m+n is greater than 2 and Y is a sulfur or other chalcogens.

3. The process of claim 1, wherein the bis-diene comprises the formula: Diene-(CH₂)ₙ-X-(CH₂)ₘ-Diene, where m+n is greater than 2 and X is an aliphatic hydrocarbon group, a cycloaliphatic hydrocarbon, aliphatic perfluoro carbon, or an aromatic hydrocarbon or a combination thereof; silane or siloxane; phosphine or phosphine oxides; epoxide, ethylene oxides or propylene oxides group.

4. The process of at least one of the previous claims, wherein the lanthanide catalyst system comprises a neodymium catalyst.

5. The process of claim 4, wherein the lanthanide catalyst system is prepared by (1) reacting a neodymium carboxylate with an organoaluminum compound in the presence of a conjugated diolefin monomer to produce neodymium-aluminum catalyst component, and (2) subsequently reacting the neodymium-aluminum catalyst component with an alkyl aluminum chloride to produce the neodymium catalyst system, wherein the neodymium catalyst is prepared at a temperature that is within the range of -60°C to 150°C, wherein the organoaluminum compound is selected from the group consisting of trialkylaluminum compounds and dialkylaluminum hydride compounds, and wherein the molar ratio of isoprene monomer to neodymium ranges from 5/1 to 500/1.

6. A 1,4-cis polydiene, the 1,4-cis polydiene being a reaction product of at least a 1,3-butadiene monomer in the presence of a lanthanide catalyst system and a bis-diene additive.

7. The 1,4-cis polydiene of claim 6, wherein the 1,4-cis polydiene has a Mooney viscosity (ML1+4 at 100°C) from 40 to 90.

8. The 1,4-cis polydiene of claim 6 or 7, wherein the mole ratio of monomer to a bis-diene ranges from 4200 to 29000.

9. The 1,4-cis polydiene of at least one of the claims 6 to 8, wherein the bis-diene additive is bridged by an aliphatic hydrocarbon group, a cycloaliphatic hydrocarbon, aliphatic perfluoro carbon, or an aromatic hydrocarbon or a combination thereof.

10. The 1,4-cis polydiene of at least one of the claims 6 to 9, wherein the bis-diene additive is bridged by sulfur, a chalcogen or a combination thereof.

11. The 1,4-cis polydiene of at least one of the claims 6 to 8, wherein the bis-diene additive is bridged by silane or siloxane.

12. The 1,4-cis polydiene of at least one of the claims 6 to 8, wherein the bis-diene additive is bridged by phosphine or phosphine oxides.

13. The 1,4-cis polydiene of at least one of the claims 6 to 8, wherein the bis-diene additive is bridged by epoxide.

14. The 1,4-cis polydiene of at least one of the claims 6 to 8, wherein the bis-diene additive is bridged by ethylene oxides or propylene oxides group.

15. A tire having a tread or carcass compound comprising the 1,4-cis polydiene of at least one of the claims 6 to 14.
